(19) Europäisches Patentamt
European Patent Office
Office européen des brevets

(11) **EP 1 956 386 A1**

(12) **DEMANDE DE BREVET EUROPEEN**

(43) Date de publication:
**13.08.2008 Bulletin 2008/33**

(51) Int Cl.:
*G01S 1/00* (2006.01)   *G01S 5/14* (2006.01)

(21) Numéro de dépôt: **08290081.2**

(22) Date de dépôt: **30.01.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **07.02.2007 FR 0700853**

(71) Demandeur: **Sagem Défense Sécurité**
**75015 Paris (FR)**

(72) Inventeur: **Vacher, Charlie**
**75018 Paris (FR)**

(74) Mandataire: **Lavialle, Bruno François Stéphane et al**
**Cabinet Boettcher**
**22 rue du Général Foy**
**75008 Paris (FR)**

(54) **Procédé de détermination d'une position d'un corps mobile et d'une limite de protection autour de cette position**

(57)   Procédé de localisation d'un corps mobile (1) à partir de données satellitaires issues d'une constellation de satellites (2), le procédé comprenant les étapes de :
- déterminer une position estimée ($\hat{X}$) du corps mobile à un instant k et une limite de protection (PL1)
- déduire des valeurs ($\hat{Y}$) de données satellitaires correspondant à la position estimée et calculer un écart entre les valeurs déduites et des valeurs (Y) de données satellitaires acquises à l'instant k,
- si l'écart satisfait à un test de validité, recaler la position estimée en fonction de l'écart,
- en cas de recalage, calculer une deuxième limite de protection (PL2) sur la position recalée ($X_{rec}$) et la comparer à celle précédemment déterminée pour retenir la plus grande des deux comme limite de protection (PL) valable pour la position recalée.

FIG.1

**EP 1 956 386 A1**

## Description

La présente invention concerne un procédé de localisation d'un véhicule à partir de données satellitaires. Ce procédé peut notamment être mis en oeuvre dans le système de positionnement global connu sous l'acronyme GPS ("Global Positioning System").

ARRIERE PLAN DE L'INVENTION

Classiquement, la localisation d'un véhicule, tel qu'un aéronef, est réalisée à partir, d'une part, de données fournies par une centrale de mesure embarquée (incluant par exemple une centrale inertielle et un baroal-timètre) et, d'autre part, de données issues de signaux satellitaires provenant d'une constellation de satellites en orbite autour de la Terre. Les données issues de signaux satellitaires sont des distances (ou pseudo-distances) séparant l'aéronef des satellites émetteurs des signaux satellitaires. Le traitement combiné de ces données, par exemple au moyen d'un filtre de calcul de type KALMAN, permet de déterminer l'état de l'aéronef, c'est-à-dire notamment une position précise proche de la position réelle de l'aéronef, la vitesse et l'attitude de l'aéronef.

Entre les réceptions de signaux satellitaires, la position de l'aéronef est estimée à partir des données inertielles appliquées à la dernière position calculée. La position ainsi déterminée est périodiquement recalée à chaque réception de signaux satellitaires.

La précision de la position calculée est toutefois fortement sensible à une défaillance de la constellation de satellites, c'est-à-dire en cas d'une défaillance d'un satellite qui affecterait l'exactitude des données transmises et qui ne serait pas détectée, ou en cas d'une défaillance simultanée ou de défaillances consécutives de deux satellites de la constellation (le risque de défaillance simultanée de trois satellites est tellement faible qu'il est en général négligé).

Il est pour cette raison habituel de fournir au pilote de l'aéronef une limite ou un volume, dit de protection, centré sur la position calculée et représentatif de la précision de cette position en tenant compte du risque de défaillance d'un ou deux satellites. Le volume global de protection est un cylindre d'axe vertical défini par son rayon et sa hauteur usuellement nommés HPL et VPL. La position réelle de l'aéronef, si elle ne coïncide pas exactement avec la position calculée, a une.probabilité au plus égale à un seuil de sécurité acceptable (ou risque d'intégrité) de se trouver hors du volume global de protection.

Le calcul du volume de protection suppose de définir le risque d'intégrité en tenant compte de la probabilité d'une absence de défaillance, de la survenue d'une défaillance et de la survenue de deux défaillances de la constellation de satellites. Le calcul du volume de protection correspondant à chaque cas repose sur la distribution statistique de l'erreur de position. Le volume global de protection est déterminé de telle manière que le risque d'intégrité soit au moins égal à la probabilité pour que la position réelle soit dans le volume de protection. Le document US-A-2004239560 décrit un tel procédé de calcul du volume de protection.

Les défaillances de la constellation de satellites ne sont cependant pas les seuls évènements à pouvoir affecter la précision de la position calculée. Un certain nombre de défaillances, comme celles pouvant affecter le récepteur, ou de perturbations liées à l'environnement de l'aéronef comme le relief et des phénomènes climatiques tel que les orages, peuvent ainsi fausser les calculs.

Pour limiter le risque d'erreur qui en découle, il est connu d'effectuer un test dit d'innovation sur chaque donnée satellitaire avant d'utiliser une donnée satellitaire pour recaler la position estimée de l'aéronef. Ce test, notamment abordé dans la norme RTCA/DO-229C (« Minimum Operational Performance Standards for Global Positioning System / Wide Area Augmentation System Airborne Equipment ») consiste à comparer l'innovation de la donnée satellitaire (l'écart entre la valeur mesurée de cette donnée et la valeur estimée de cette donnée) avec la statistique de l'innovation.

Si le test d'innovation est positif, l'innovation est utilisée pour recaler la position précédemment calculée. Or, en présence d'une défaillance ou d'une perturbation du type précédent qui n'est pas détectée par le système, il existe un risque que la position recalée se trouve à l'extérieur de la limite de protection alors que la position précédemment calculée se trouvait à l'intérieur de la limite de protection. Ceci peut notamment survenir lorsque la défaillance ou la perturbation a un effet non détecté sur la mesure, cet effet étant insuffisant pour que l'innovation échoue au test d'innovation. Un tel recalage peut s'avérer catastrophique dans certaines circonstances, notamment pour un aéronef en vol de basse altitude ou en phase d'atterrissage.

Il est connu du document "GPS/IRS AIME : Circulation of Thresholds and Protection Radius Using Chi-Square Methods", John DIESEL et Sherry LUU, PROCEEDINGS OF THE ION-CPS 95, Septembre 1995, pages 1959-1964, Palm Springs CA, Etats-Unis, un procédé de localisation GPS dans lequel un recalage est fait après un test d'innovation lorsqu'une position estimée est séparée d'une position mesurée. Il n'est pas recalculé de limite de protection spécifiquement sur la position recalée.

Un but de l'invention est de fournir un moyen permettant de prendre en compte, au moins en partie, les défaillances et perturbations dont l'impact sur l'innovation n'est pas détecté.

A cet effet, on prévoit, selon l'invention, un procédé de détermination d'une position d'un corps mobile et d'une limite de protection autour de cette position à partir de données satellitaires issues d'une constellation de satellites, le procédé comprenant les étapes de :

- déterminer une position estimée du corps mobile à un instant et la limite de protection à partir d'une probabilité de défaillance de la constellation de satellites, d'une probabilité d'absence de défaillance de la constellation de satellites et d'un seuil de sécurité prédéterminé,
- déduire des valeurs de données satellitaires correspondant à partir de la position estimée et calculer un écart entre les valeurs déduites et des valeurs de données satellitaires acquises à l'instant,
- si l'écart satisfait à un test de validité prédéterminé, recaler la position estimée en fonction des valeurs de données satellitaires acquises,
- en cas de recalage, calculer une deuxième limite de protection sur la position recalée en fonction d'une probabilité de défaillance non prise en compte dans le calcul de la première limite de protection et non révélée par le test de validité, et la comparer à celle précédemment déterminée pour retenir la plus grande des deux comme limite de protection valable pour la position recalée.

Le calcul d'une deuxième limite de protection sur la position recalée permet d'obtenir une limite de protection adaptée à la position recalée, en tenant compte de défaillances non détectées par le test d'innovation et non prises en compte dans le calcul de la première limite de protection.

De préférence, dans ce procédé.

- le test de validité comprend l'étape de vérifier si une probabilité, pour que l'écart soit exact et soit supérieur à un premier paramètre, est égale à un seuil maximal d'erreur prédéterminé,
- la deuxième limite de protection résulte d'une somme d'au moins un premier et un deuxième éléments, le premier élément étant proportionnel au premier paramètre, le deuxième élément ayant une valeur définie en fonction d'un deuxième seuil de sécurité acceptable en cas de défaillance non prise en compte dans le calcul de la première limite de protection.

Ainsi, le calcul de la deuxième limite de protection prend en compte le premier paramètre intervenant dans le test d'innovation et un deuxième seuil de sécurité acceptable en cas de défaillance non prise en compte dans le calcul de la première limite de protection. Le choix du deuxième seuil de sécurité permet en outre une adaptation de la taille de la deuxième limite de protection en fonction des défaillances dont on souhaite tenir compte, par exemple en fonction de l'environnement du corps mobile.

Plus précisément, la valeur du deuxième élément est avantageusement choisie telle que, en cas de défaillance non prise en compte dans le calcul de la première limite de protection, une probabilité pour qu'une distance entre une position réelle et la position estimée du corps mobile soit supérieure à cette valeur est égale au deuxième seuil de sécurité.

D'autres caractéristiques et avantages de l'invention ressortiront à la lecture de la description qui suit d'un mode de mise en oeuvre particulier, non limitatif, de l'invention.

BREVE DESCRIPTION DES DESSINS

Il sera fait référence aux dessins annexés, parmi lesquels :

- la figure 1 est une représentation schématique d'une constellation de satellites présents au-dessus de l'horizon d'un aéronef,
- la figure 2 est une représentation schématique par blocs du procédé selon un mode de mise en oeuvre particulier.

DESCRIPTION DETAILLEE DE L'INVENTION

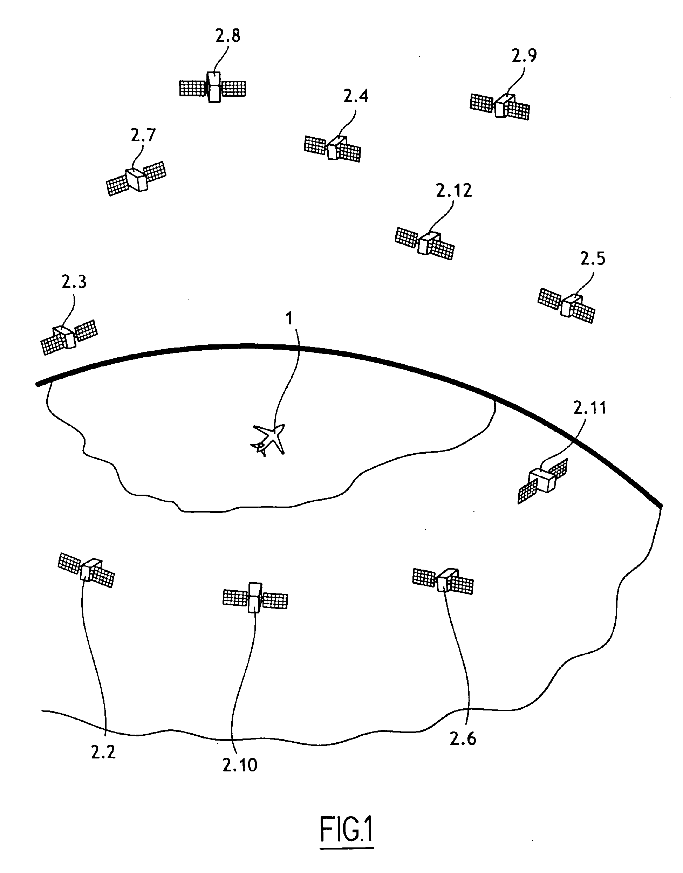

En référence à la figure 1, le procédé de l'invention est ici décrit en relation avec un aéronef 1 embarquant un système de navigation utilisant des données issues de N satellites 2.i (avec i variant de 1 à N, soit 2.1, 2.2, 2.3, 2.4, 2.5, 2.6, 2.7, 2.8, 2.9, 2.10, 2.11, 2.12 sur la figure) en orbite autour de la Terre 100 et des données issues d'une centrale inertielle embarquée sur l'aéronef 1.

La centrale inertielle est connue en elle-même et délivre, à partir de capteurs fixés à l'aéronef 1, des données relatives notamment à l'assiette de l'aéronef 1, sa vitesse...

Les satellites 2.1 à 2.12 font partie d'un ensemble de satellites qui sont positionnés en orbite autour de la Terre et qui appartiennent à un système de localisation par satellites de type GPS. Chaque satellite 2.i émet en permanence un signal comportant sa localisation et l'heure précise d'émission du signal. Les N satellites 2.i émettent ainsi à intervalle régulier N signaux appelés par la suite données satellitaires.

Le système de navigation comprend de façon connue en elle-même une unité de calcul reliée à la centrale inertielle et à un récepteur des signaux issus des satellites. L'unité de calcul incorpore de façon connue en elle-même des processeurs et des mémoires lui permettant de calculer une pseudo-distance séparant l'aéronef 1 de chaque satellite 2.i dont le signal est détecté par le récepteur et de réaliser une fusion de ces pseudo-distances et des données provenant de la centrale inertielle afin de déterminer entre autres une position de l'aéronef 1.

Les calculs sont réalisés de manière connue en elle-même en utilisant des filtres de Kalman ou tout autre algorithme permettant de réaliser notamment une fusion de données.

Le système de navigation fournit ainsi périodiquement un état de l'aéronef, c'est-à-dire une position, une vitesse et une attitude de l'aéronef, à partir des données inertielles et des données satellitaires. La position est définie par une composante horizontale (ici une latitude et une longitude) et une composante verticale (ici une altitude).

Entre deux réception de signaux satellitaires, le système de navigation fournit des positions estimées à partir des seules données inertielles (qui sont obtenues continûment) en partant de positions antérieures, cette opération est appelée propagation. A la réception de nouvelles données satellitaires, la position estimée à la réception des données satellitaires est recalée en fonction de l'innovation desdites données satellitaires, cette opération est appelée recalage. Le recalage n'est effectué que si les données satellitaires satisfont à un test de validité appelé test d'innovation.

L'innovation d'une donnée satellitaire Y à l'instant k+1 est égale à la différence entre la valeur mesurée de cette donnée et la valeur estimée (ou prédite) de cette donnée, soit $inno_{k+1} = Y - H_{k+1} \cdot \hat{X}^{k+1/k}$ (1) où :

- $Y$ est la donnée satellitaire,
- $\hat{X}^{k+1/k}$ est l'état prédit par le filtre de Kalman à l'instant k+1 connaissant l'état X à l'instant k (dans la suite de la description on appelle X état ou position, l'état comprenant la position),
- $H_{k+1}$ est la matrice d'observation liée à la mesure Y.

L'innovation est donc un écart entre des valeurs de données satellitaires déduites de l'état prédit $\hat{X}^{k+1/k}$ et des valeurs Y de données satellitaires acquises à l'instant k+1.

Le test d'innovation revient à comparer l'innovation et la statistique de l'innovation.

La statistique de l'innovation est l'espérance $E[inno_{k+1} \cdot inno^{T}_{k+1}]$ qui est égale à $(H_{k+1} \cdot P^{k+1/k} \cdot H \cdot H^{T}_{k+1} + R)$ avec :

$$- \quad P = E\left[\left(X - \hat{X}\right) \cdot \left(X - \hat{X}\right)^{T}\right] = E\left[\Delta X_0 \cdot \Delta X_0^{T}\right],$$

$\Delta X_0$ étant l'erreur de position soit l'écart entre l'état réel et l'état estimé, P formant la matrice de covariance correspondant à la position concernée,

- $R = E[\nu \cdot \nu^{T}]$, $\nu$ étant le bruit de la mesure.

Le test d'innovation est positif si :

$$inno_{k+1}{}^2 \leq \alpha^2 \cdot \left(H_{k+1} \cdot P^{k+1/k} \cdot H^{T}_{k+1} + R\right) \qquad (2)$$

avec $a^2 \cdot (H_{k+1} \cdot P^{k+1/k} \cdot H^{T}_{k+1} + R)$ étant le seuil d'innovation.

Le paramètre $\alpha$ est déterminé de telle manière que la probabilité que l'innovation, non perturbée, soit supérieure à $\alpha$ est égale à un seuil d'erreur maximal acceptable, ici la probabilité $P_{fd}$ de rejet d'une donnée satellitaire valable, soit $p(inno_{k+1} > \alpha / H_0) = P_{fd}$, en notant $H_0$ l'hypothèse sous laquelle l'innovation, n'est pas perturbée.

L'étape de propagation se définit comme suit:

$$X^{k+1/k}_{IP} = \Phi \cdot X^{k/k}_{IP}$$
$$X^{k+1/k}_{rec} = \Phi \cdot X^{k/k}_{rec} \qquad (3)$$

Avec $\Phi$ la matrice de transition entre l'instant k et l'instant k+1 ; $X_{IP}$ le vecteur d'état propagé sur un horizon de t secondes ; $X_{rec}$ le vecteur d'état recalé à chaque pas de calcul avec les données satellitaires ayant passé le test d'innovation.

Cette étape de propagation est classique. La matrice de transition $\Phi$ est calculée de différentes façons connues en elles-mêmes selon la méthode de calcul de la position effectivement choisie (filtre de Kalman, moindre carré ...).

L'opération de recalage se définit comme suit :

$$X_{IP}^{k+1/k+1} = X_{IP}^{k+1/k}$$
$$X_{rec}^{k+1/k+1} = X_{rec}^{k+1/k} + K_{k+1} \cdot inno_{k+1} \qquad (4)$$

avec $K_{k+1}$ le gain du filtre de Kalman à l'instant k+1 soit, en notant $dX = X_{rec} - X_{IP}$,

$$dX^{k+1/k} = \Phi \cdot dX^{k/k}$$
$$dX^{k+1/k+1} = dX^{k+1/k} + K_{k+1} \cdot inno_{k+1} \qquad (5)$$

La statistique de la séparation (la séparation est l'écart entre l'état résultant de la propagation et l'état résultant du recalage) est alors donnée par $dP = E\lfloor dX \cdot dX^T \rfloor$ de sorte qu'on obtient pour les étapes de recalage et de propagation respectivement :

$$dP^{k+1/k} = \Phi \cdot dP^{k/k} \cdot \Phi^T$$
$$dP^{k+1/k+1} = dP^{k+1/k} + K_{k+1} \cdot E\left[inno_{k+1} \cdot inno_{k+1}^T\right] \cdot K_{k+1}^T \qquad (6)$$

Pour chaque position estimée, le système fournit également un volume global de protection défini par une limite globale de protection horizontale HPL et une limite globale de protection verticale VPL calculées à partir des données satellitaires. Pour simplifier, on parle dans la suite de la limite de protection PL (les opérations de calcul de la limite globale de protection verticale et de la limite de protection horizontale étant sensiblement les mêmes).

Le volume global de protection, qui doit être le plus petit possible, est déterminé pour que, si la position réelle X de l'aéronef ne coïncide pas exactement avec la position calculée, cette position réelle a une probabilité au plus égale à un seuil de sécurité acceptable de se trouver hors du volume global de protection.

Dans le procédé conforme à l'invention, il est calculé une première limite de protection PL1 à partir d'une probabilité de défaillance de la constellation de satellites, d'une probabilité d'absence de défaillance de la constellation de satellites et d'un premier seuil de sécurité $P_{ir}$ prédéterminé. On a ainsi $p(e \geq PL1) \leq P_{ir}$, la probabilité que l'erreur de position e, soit supérieure à la première limite de protection PL1, est inférieure ou égale au seuil de sécurité $P_{ir}$ acceptable en cas de défaillance de la constellation de satellites (ce seuil de sécurité est également appelé risque d'intégrité). La première limite de protection PL1 est calculée de façon connue en elle-même à partir de la distribution statistique de l'erreur sur la position calculée (distribution gaussienne pour la composante verticale de la position et distribution $X^2$ pour la composante horizontale de la position). Le risque d'intégrité $P_{ir}$ ne doit pas être dépassé en cas de panne d'un ou de deux des satellites de la constellation. Une panne de trois satellites de la constellation a une probabilité de $10^{-12}$ et est négligée.

Lorsqu'il n'y a pas eu de recalage, la limite de protection PL est la première limite de protection PL1.

Selon le procédé de l'invention, lorsqu'un recalage a eu lieu, on calcule une deuxième limite de protection PL2 en utilisant le résultat du test d'innovation dans les formules (6) de manière à borner la séparation entre la navigation recalée et la navigation propagée :

$$\left\| dX^{k+1/k+1} \right\| \leq \alpha^2 \cdot \left( dP^{k+1/k} + K_{k+1} \cdot \left( H_{k+1} \cdot P^{k+1/k} H_{k+1}^T + R \right) \cdot K_{k+1}^T \right) \qquad (7)$$

Dont on déduit :

$$\left\| dX^{k+1/k+1} \right\| \leq D \quad \text{avec} \quad D = \alpha \cdot \sqrt{\left( dP^{k+1/k} + K_{k+1} \cdot \left( H_{k+1} \cdot P^{k+1/k} H_{k+1}^T + R \right) \cdot K_{k+1}^T \right)} \qquad (8)$$

La probabilité que l'erreur de position

$$\left\| \Delta X_0^{k+1/k+1} \right\|$$

dépasse la limite de protection PL2, en présence de types de défaillances non détectés et non pris en compte dans le calcul de la première limite de protection PL1, s'écrit :

$$\Pi = p\left(\left\| \Delta X_0^{k+1/k+1} \right\| > PL2 \,/\, \text{existence de défaillances non détectées}\right) = P_{ir}'$$

où $P_{ir}'$ est un deuxième seuil de sécurité acceptable en cas de défaillance non prise en compte dans le calcul de la première limite de protection (PL1).

$$\text{Avec} \quad \left\| \Delta X_0^{k+1/k+} \right\| = \left\| \Delta X_{propagé}^{k+1/k+1} + dX^{k+1/k+1} \right\| \leq \left\| \Delta X_{propagé}^{k+1/k+1} \right\| + \left\| dX^{k+1/k+1} \right\|$$

et $\Delta X_{propagé} = X - \hat{X}_{propagé}$ , on obtient :

$$\Pi \leq p\left(\left\| \Delta X_{propagé}^{k+1/k+1} \right\| > PL2 - \left\| dX^{k+1/k+1} \right\| \,/\, \text{existence défaillances non détectées}\right)$$

et donc $\Pi \leq p\left(\left\| \Delta X_{propagé}^{k+1/k+1} \right\| > PL2 - D \,/\, \text{existence défaillances non détectées}\right)$

On détermine ensuite la borne A telle que :

$$p\left(\left\| \Delta X_{propagé}^{k+1/k+1} \right\| > A \,/\, \text{existence défaillances non détectées}\right) = P_{ir}' \qquad (9)$$

Et la deuxième limite de protection PL2 est obtenue en calculant :

$$PL2 = A + D \qquad (10)$$

La deuxième limite de protection PL2 résulte ainsi de la somme:

- d'un premier élément D qui est proportionnel au premier paramètre $\alpha$ et qui est supérieur à l'innovation ; et
- d'un deuxième élément A ayant une valeur définie en fonction du deuxième seuil de sécurité $P_{ir}'$ acceptable en cas de défaillance non prise en compte dans le calcul de la première limite de protection PL1.

Le deuxième seuil de sécurité $P_{ir}'$ est déterminé par exemple en fonction du type de défaillances que l'on souhaite prendre en compte, en se basant notamment sur l'environnement dans lequel évolue l'aéronef (par exemple, pour un aéronef militaire en vol en territoire ennemi, il y a un risque de brouillage pouvant perturber la réception des données satellitaires ou pour un aéronef en vol dans une zone propice aux réflexions, il y a un risque d'allongement du temps de trajet des signaux provenant des satellites).

La première limite de protection PL1 et la deuxième limite de protection PL2 sont ensuite comparée l'une à l'autre, et la plus grande des deux est finalement retenue comme limite de protection PL pour la position $X_{rec}^{k+1/k+1}$ .

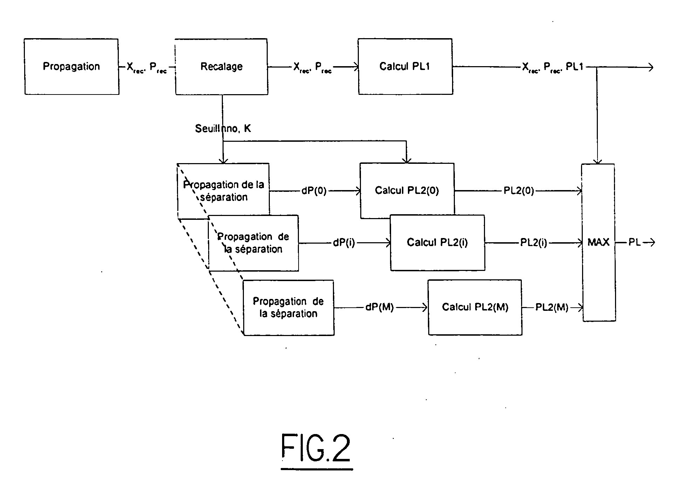

Le calcul de la limite de protection conforme à l'invention est également possible après plusieurs propagations (voir la figure 2).

Le système de navigation fournit alors périodiquement :

- un état de navigation $\hat{X}_{rec}$ calculé classiquement en réalisant la fusion des données satellitaires et des données inertielles,
- un jeu de M états de navigations $\hat{X}_{IP}$ propagés uniquement au moyen des données inertielles, sur M coups (ou sur t(M) secondes).

L'étape de propagation se définit alors comme suit :

- pour l'état de navigation calculé par fusion

$$X_{rec}^{k+1/k} = \Phi \cdot X_{rec}^{k/k} \ ,$$

- pour le jeu de M états de navigations

$$\forall m \in \left[ (k+1) - M, (k+1) \right]$$

$$X_{IP}^{k+1/k}(m) = \Phi \cdot X_{IP}^{k/k}(m)$$

L'étape de recalage se définit alors comme suit:

- pour l'état de navigation classique

$$X_{rec}^{k+1/k+1} = X_{rec}^{k+1/k} + K_{k+1} \cdot inno_{k+1}$$

- pour le jeu de M états de navigations, qui ne sont pas recalés

$$\forall m \in \left[ (k+1) - M, (k+1) \right]$$

$$X_{IP}^{k+1/k+1}(m) = X_{IP}^{k+1/k}(m)$$

La statistique de la séparation dX(m) est donnée pour les étapes de recalage et de propagation respectivement par:

$$\forall m \in \left[ (k+1) - M, (k+1) \right]$$

$$dP^{k+1/k}(m) = \Phi \cdot dP^{k/k}(m) \cdot \Phi^T$$

$$dP^{k+1/k+1}(m) = dP^{k+1/k}(m) + K_{k+1} \cdot E\left[ inno_{k+1} \cdot inno_{k+1}^T \right] \cdot K_{k+1}^T$$

Pour chacune de ces séparations, on a :

$$\left\| dX^{k+1/k+1}(m) \right\| \leq \alpha^2 \cdot \left( dP^{k+1/k}(m) + K_{k+1} \cdot \left( H_{k+1} \cdot P^{k+1/k} H_{k+1}^T + R \right) \cdot K_{k+1}^T \right)$$

On calcule pour chacune de ces séparations, une limite de protection PL2(m) telle que : PL2(m) = A(m)+D (voir les formules (8) et (9) pour le calcul de A et D) avec i variant de 1 à M, et on compare les limites de protection PL2 (m) pour retenir la plus grande comme deuxième limite de protection PL2.

Cette deuxième limite de protection PL2 est ensuite, comme précédemment, comparée à la première limite de protection PL1. Cette limite de protection est ainsi valable pour les M propagations considérées.

On note que, dans ce mode de mise en oeuvre du procédé de l'invention, c'est la séparation qui est propagée et utilisée pour le calcul des deuxièmes limites de protection PL2(i) avec le seuil d'innovation et le gain du filtre de Kalman K utilisés pour le recalage. Il n'est donc pas nécessaire de calculer les M états propagés. En variante, il est toutefois possible de calculer les M états, calculer M innovations (écart entre la valeur mesurée Y de la donnée satellitaire et la valeur estimée $\hat{Y}$ de cette donnée satellitaire) et élaborer M tests d'innovation en comparant l'innovation calculée avec la statistique de l'innovation. Ceci permet d'améliorer les possibilités de détection d'une donnée satellitaire affectée par une défaillance.

Bien entendu, l'invention n'est pas limitée aux modes de mise en oeuvre décrits mais englobe toute variante entrant dans le cadre de l'invention telle que définie dans les revendications.

Les positions peuvent être estimées à partir de données satellitaires uniquement ou à partir également des données provenant d'une centrale de mesure comme une centrale inertielle.

**Revendications**

1. Procédé de détermination d'une position d'un corps mobile (1) et d'une limite de protection autour de cette position à partir de données satellitaires issues d'une constellation de satellites (2), **caractérisé en ce que** le procédé comprend les étapes de :

   - déterminer une position estimée ($\hat{X}$) du corps mobile à un instant (k+1) et la limite de protection (PL1) à partir d'une probabilité de défaillance de la constellation de satellites et d'un seuil de sécurité ($P_{IR}$) prédéterminé,
   - déduire des valeurs ($\hat{Y}$) de données satellitaires correspondant à la position estimée et calculer un écart entre les valeurs déduites ($\hat{Y}$) et des valeurs ($Y$) de données satellitaires acquises à l'instant (k+1),
   - si l'écart satisfait à un test de validité, recaler la position estimée en fonction des données satellitaires acquises,
   - en cas de recalage, calculer une deuxième limite de protection (PL2) sur la position recalée ($X_{rec}$) en fonction d'une probabilité de défaillance non prise en compte dans le calcul de la première limite de protection et non révélée par le test de validité, et la comparer à celle précédemment déterminée pour retenir la plus grande des deux comme limite de protection (PL) valable pour la position recalée.

2. Procédé selon la revendication 1, dans lequel :

   - le test de validité comprend l'étape de vérifier si une probabilité, pour que l'écart soit exact et soit supérieur à un premier paramètre ($\alpha$), est égale à un seuil maximal d'erreur ($P_{fd}$) prédéterminé
   - la deuxième limite de protection (PL2) résulte d'une somme d'au moins un premier et un deuxième éléments (D, A), le premier élément (D) étant proportionnel au premier paramètre ($\alpha$), le deuxième élément (A) ayant une valeur définie en fonction d'un deuxième seuil de sécurité ($P_{IR}'$) acceptable en cas de défaillance non prise en compte dans le calcul de la première limite de protection (PL1).

3. Procédé selon la revendication 2, dans lequel la valeur du deuxième élément (A) est telle que, en cas de défaillance non prise en compte dans le calcul de la première limite de protection (PL1), une probabilité pour qu'une distance entre une position réelle et la position estimée du corps mobile (1) soit supérieure à cette valeur est égale au deuxième seuil de sécurité ($P_{IR}'$).

4. Procédé selon la revendication 2, dans lequel la limite de protection étant valable sur un nombre (M) de positions calculées à partir d'une position estimée et d'au moins une donnée provenant d'une centrale de mesure embarquée sur le corps mobile, il est calculé autant de premiers éléments et de deuxièmes éléments pour obtenir une deuxième limite de protection (PL2(m)) pour chaque position calculée, le procédé comprenant les étapes ultérieures de comparer les deuxième limites de protection à la première limite de protection (PL1) pour retenir la plus grande comme limite de protection (PL).

5. Procédé selon la revendication 1, dans lequel la position est estimée à partir d'au moins une position antérieure connue et de données provenant d'une centrale de mesure.

FIG.1

Propagation — $X_{rec}$, $P_{rec}$ — Recalage — $X_{rec}$, $P_{rec}$ — Calcul PL1 — $X_{rec}$, $P_{rec}$, PL1

Seuill no, K

Propagation de la séparation — dP(0) — Calcul PL2(0) — PL2(0)

Propagation de la séparation — dP(i) — Calcul PL2(i) — PL2(i) — MAX — PL

Propagation de la séparation — dP(M) — Calcul PL2(M) — PL2(M)

FIG.2

**Office européen**

**des brevets**

**RAPPORT DE RECHERCHE EUROPEENNE**

Numéro de la demande

EP 08 29 0081

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DIESEL, J. AND LUU, S.: "GPS/IRS AIME: Calculation of Thresholds and Protection Radius Using Chi-Square Methods" PROCEEDINS OF THE ION-GPS 95, septembre 1995 (1995-09), pages 1959-1964, XP002434515 Palm Springs, CA, USA * pages 1961-1963, section "AIME FDE" * ----- | 1,5 | INV. G01S1/00 G01S5/14 |
| A,D | US 2004/239560 A1 (COATANTIEC JACQUES [FR] ET AL) 2 décembre 2004 (2004-12-02) * figures 1,2,4 * * alinéa [0053] - alinéa [0085] * * alinéa [0113] - alinéa [0131] * * alinéa [0137] * ----- | 1-5 | |
| A | LEE Y C ET AL: "A performance Analysis of a Tightly Coupled GPS/Inertial System for Two Integrity Monitoring Methods" PROCEEDINGS OF THE INSTITUTE OF NAVIGATION (ION) GPS, XX, XX, 14 septembre 1999 (1999-09-14), pages 1187-1200, XP002382515 * figure 1 * * page 1189, section "System Architecture" * * pages 1190-1191, section "Extrapolation Method" * ----- | 1-5 | DOMAINES TECHNIQUES RECHERCHES (IPC) G01S |
| A | US 2002/109628 A1 (DIESEL JOHN W [US]) 15 août 2002 (2002-08-15) * le document en entier * ----- | 1-5 | |

Le présent rapport a été établi pour toutes les revendications

| Lieu de la recherche | Date d'achèvement de la recherche | Examinateur |
|---|---|---|
| Munich | 9 mai 2008 | Hekmat, Taymoor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 29 0081

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-05-2008

| Document brevet cité<br>au rapport de recherche | Date de<br>publication | Membre(s) de la<br>famille de brevet(s) | Date de<br>publication |
|---|---|---|---|
| US 2004239560 A1 | 02-12-2004 | CA 2461595 A1<br>EP 1430272 A1<br>FR 2830320 A1<br>WO 03029755 A1 | 10-04-2003<br>23-06-2004<br>04-04-2003<br>10-04-2003 |
| US 2002109628 A1 | 15-08-2002 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004239560 A

**Littérature non-brevet citée dans la description**

- **JOHN DIESEL ; SHERRY LUU.** GPS/IRS AIME : Circulation of Thresholds and Protection Radius Using Chi-Square Methods. *PROCEEDINGS OF THE ION-CPS,* Septembre 1995, vol. 95, 1959-1964